# EUROPÄISCHE PATENTANMELDUNG

(11) **EP 4 012 069 A1**
(43) Veröffentlichungstag der Anmeldung: **15.06.2022**
(21) Anmeldenummer: 21213047.0
(22) Anmeldetag: 08.12.2021
(51) Int. Cl.: C23C 28/02, B64G 1/22, B64G 1/62, C23C 30/00

(54) **VERBESSERUNG DER ZERSTÖRBARKEIT WÄHREND DES ATMOSPHÄRISCHEN EINTRITTS-FLUGS DURCH BESCHICHTUNG VON BAUTEIL-OBERFLÄCHEN**

(30) Priorität: 08.12.2020 DE 102020132644
(71) Anmelder: Deutsches Zentrum für Luft- und Raumfahrt e.V., 53227 Bonn (DE)
(72) Erfinder: Schleutker, Thorn, 51147 Köln (DE)
(74) Vertreter: dompatent von Kreisler Selting Werner - Partnerschaft von Patent- und Rechtsanwälten mbB

(57) **Zusammenfassung**

Die vorliegende Erfindung betrifft ein Bauteil für die Raumfahrt mit einer Beschichtung, die bei Eintritt in die Atmosphäre zu einer höheren Zerstörbarkeit des Bauteils führt.

## Beschreibung

Die vorliegende Erfindung betrifft ein Bauteil für die Raumfahrt mit einer Beschichtung, die bei Eintritt in die Atmosphäre zu einer höheren Zerstörbarkeit des Bauteils führt.

Aktuell steigt das Interesse der nationalen und internationalen Raumfahrtagenturen, aber auch der Öffentlichkeit, an der Vermeidung von Unfällen im Zusammenhang mit zur Erde zurückkehrendem Weltraumschrott. Im Zuge dessen werden bindende Regeln verabschiedet, die Raumfahrt-betreibende Unternehmen zum Einhalten gewisser Risiko-Grenzwerte verpflichten. In Europa ist dies beispielsweise ein "Casualty Risk"-Wert von 1:10 000. Das bedeutet, jeder gestartete Satellit darf statistisch nur noch in einem von 10 000 Fällen eine Person auf der Erde mittels seiner Reste, die den Wiedereintritts-Flug ohne zu Verglühen überstehen, schädigen.

Da aktuelle Satelliten und Raketen-Oberstufen dieses Kriterium oft verfehlen, müssen diese mit einer Antriebsmöglichkeit ausgestattet werden, die es erlaubt, den Weltraumschrott gezielt über unbewohntem Gebiet zum Absturz zu bringen. Dies ist mit hohen Kosten verbunden und reduziert die mögliche Nutzlast-Masse. Die Raumfahrt-Unternehmen versuchen daher, Raumfahrzeuge so zu entwerfen, dass diese beim Eintritt in die Erdatmosphäre möglichst vollständig verglühen. Wenn der Satellit ein hinreichend geringes Risiko darstellt, kann er am Ende seiner Lebenszeit sich selbst überlassen werden. Er tritt dann irgendwann unkontrolliert in die Erdatmosphäre ein und geht gegebenenfalls über bewohntem Gebiet herab.

Die Zerstörbarkeit des Weltraumschrotts hängt unter anderem vom Orbit, aus dem der Schrott in die Atmosphäre eintritt, und der daraus resultierenden Eintritts-Geschwindigkeit und -Flugbahn ab. So können Komponenten, die bei der einen Umlaufbahn als nicht zerstörbar gelten, bei einem Eintritt aus einem anderen Orbit zerstörbar sein. Ein typisches Beispiel hierfür sind größere Titan-Bauteile; diese sind oftmals bei einem Eintritt aus einem niedrigen Orbit nicht zerstörbar, aber bei einem Eintritt aus einem exzentrischen Orbit kein Problem.

Für die Schrott-Teile ist auch der Zeitpunkt von deren Freisetzung aus dem Hauptfragment beziehungsweise ihrer Exposition gegenüber der Strömung entscheidend. Eine frühere Freisetzung resultiert in einem längeren Aufheizzeitraum und gegebenenfalls auch höheren thermalen und mechanischen Lasten. Dies wirkt sich auf die Zerstörbarkeit in der Regel positiv aus. Es wird daher meist eine möglichst frühe Öffnung bzw. Zerfall des Raumfahrzeugs angestrebt.

Auf Komponenten-Ebene wird versucht, die Freisetzungs-Anforderung zu reduzieren. Dies ist gleichbedeutend mit einer Erhöhung der Zerstörbarkeit. Diese wird als Zerstörungs-Höhe ("Demise Altitude") anhand von Referenz-Missionen / -Flugbahnen charakterisiert. So bedeutet zum Beispiel eine Zerstörungs-Höhe von 78 km für eine Komponente, dass diese bei Freisetzung in einer Höhe von 78 km oder höher vollständig zerstört wird. Vollständig zerstört bedeutet, dass die jeweilige Komponente soweit zerstört wird, dass die übrigbleibenden Fragmente im Rahmen der geltenden Regeln keine Gefahr mehr darstellen. Das bedeutet in Europa aktuell, dass die Fragmente beim Aufschlag auf den Erdboden eine Energie von weniger als 15 J (Joule) haben.

Experimentelle und numerische Simulationen werden verwendet, um die Zerstörbarkeit von Raketen und Satelliten sowie deren Komponenten und Bauteilen zu untersuchen und vorherzusagen. Diese Untersuchungen zeigen, dass ein bedeutender Teil des den Satelliten innewohnenden Risikos von Bauteilen ausgeht, die unter den spezifischen Bedingungen der geplanten Mission nicht als generell unzerstörbar gelten. In diesem Fall können kleinere Veränderungen ausreichen, um das Bauteil zerstörbar zu machen oder die Zerstörungs-Höhe auf den geforderten Wert abzusenken.

Simulationen zeigen, dass für viele Missionen ein Großteil des Risikos von den größeren verbauten Stahlteilen ausgeht. Stahl im Allgemeinen ist nicht als unzerstörbar zu betrachten, so überleben kleine Bauteile wie z.B. Schrauben den Eintritt meist nicht. Die massiveren Bauteile (wie z.B. Drallräder und Motoren) werden jedoch unter den gegebenen Umständen oft nicht oder nicht vollständig zerstört. Die Industrie sieht aktuell als einzige Lösung, solche Stahlbauteile komplett neu zu entwickeln. Neben konstruktiven Anpassungen ist der wichtigste Ansatz bei der Neuentwicklung, diese Bauteile aus anderen, leichter zerstörbaren Materialien (i.d.R. Aluminium-Legierungen oder Bronzen) zu fertigen. Dies ist mit hohen Kosten verbunden (Entwicklung, Test, Flug-Qualifizierung etc.). In der Regel sind diese Ersatzmaterialien mit Nachteilen verbunden; der Einsatz von Stahl findet sehr bewusst statt, wenn dessen spezifischen Eigenschaften gewünscht sind.

Ein Ziel der Erfindung ist es, solche Bauteile zerstörbar zu machen, die Zerstörungs-Höhe abzusenken oder die schon gegebene Zerstörbarkeit weiter zu verbessern. Dadurch kann gegebenenfalls das bisherige Bauteil mit minimalen Eingriffen weiterverwendet werden, ohne das Material austauschen oder das Bauteil konstruktiv anpassen zu müssen. Dies vermeidet Kosten und Unsicherheiten im Betrieb. Die Erfindung kann auch bei der Neuentwicklung von Bauteilen angewandt werden, um Zerstörbarkeit zu erreichen, diese zu erhöhen oder die Zerstörbarkeit bei höherer Entwurfsfreiheit zu wahren.

Darüber hinaus ist es das Ziel der Erfindung, die Zerstörbarkeit von bereits als leicht zerstörbar geltenden Bauteilen und Materialien weiter zu erhöhen. Dies kann, zum Beispiel bei der Anwendung der Erfindung bei den äußeren Teilen des Satelliten, die für die Zerstörung kritischen Teile früher der Strömung aussetzen und dadurch das Boden-Risiko zu minimieren helfen.

Die Erfindung kann auch selektiv, das heißt auf einzelne Bauteile oder auf Teilbereiche der Bauteiloberfläche, angewendet werden. Dadurch kann der Zerstörungsprozess gezielt beeinflusst werden, sodass der Satellit mehr oder weniger kontrolliert in Teile zerfällt und zerstört wird.

Überraschenderweise hat sich gezeigt, dass durch eine geeignete Beschichtung der in ein Bauteil eindringende Wärmestrom signifikant beeinflusst werden kann, so dass das Bauteil beim Wiedereintritt in die Atmosphäre möglichst vollständig verglüht und die Bestimmungen der Gesetzgeber und Raumfahrt-Agenturen erfüllt. In einer ersten Ausführungsform wird daher die der vorliegenden Erfindung zu Grunde liegende Aufgabe gelöst durch die Verwendung einer Beschichtung für ein Bauteil in der Raumfahrt, dadurch gekennzeichnet, dass die Beschichtung eine Erhöhung des Wärmestroms in das Bauteil beim Eintritt des Bauteils aus dem Weltraum in die Atmosphäre ermöglicht.

Das Bauteil kann dabei erfindungsgemäß beispielsweise aus einem Metall, insbesondere aus Stahl bestehen. Es kann jedoch auch ein Bauteil aus Kunststoff, Glas oder Keramik von der erfindungsgemäßen Beschichtung profitieren. Besteht ein Bauteil aus einem Material, so bedeutet dies, dass das Bauteil zumindest aus 90 Gew.-% oder mehr aus diesem Material besteht. Vorzugsweise besteht das Material zu 95 Gew.-% oder mehr, vorzugsweise zu 97 Gew.-% oder mehr, besonders zu 99 Gew.-% oder mehr. Bauteile, die zu 99,0 Gew.-% oder mehr, beispielsweise zu 99,5 Gew.-% oder mehr, insbesondere zu 99,9 Gew.-% oder mehr aus dem entsprechenden Material. Es sind erfindungsgemäß auch Komplexe Bauteile umfasst, in denen beispielsweise ein Bereich aus Stahl und ein Bereich aus Kunststoff ausgebildet ist. Die Mengenangaben beziehen sich dann auf die einzelnen Bereiche.

Vorzugsweise umfasst ein Bauteil eine metallische Beschichtung, wobei die Beschichtung während des Eintritts in den Weltraum katalytisch aktiv ist, so dass das Bauteil beim Eintritt in die Atmosphäre im Wesentlichen vollständig verglüht. Katalytisch aktiv bedeutet, dass die Reaktion der Bestandteile des das Bauteil umgebenden Gases bei der Reaktion unterstützt werden. Dies betrifft insbesondere atomaren Sauerstoff, atomaren Stickstoff und Stickoxide, die zu molekularem Sauerstoff und molekularem Stickstoff reagieren. Stickoxide sind dabei in ihrem Anteil begrenzt, so dass insbesondere atomarer Sauerstoff und atomarer Stickstoff den größten Teil der reaktiven Verbindungen ausmachen. Durch die katalytische Aktivität kann insbesondere der vom Bauteil aufgenommene Wärmestrom erhöht werden.

Im Wesentlichen vollständig verglühen im Sinne der vorliegenden Erfindung bedeutet, dass das Bauteil derart beim Eintritt in die Atmosphäre zerstört wird, dass es den gesetzlichen Bestimmungen genügt. Das bedeutet, dass die übrigbleibenden Fragmente im Rahmen der Bestimmungen keine Gefahr für die Öffentlichkeit mehr darstellen. In Europa bedeutet dies, dass diese Fragmente bei der Ankunft auf dem Boden eine Energie von weniger als 15 Joule haben.

Eintritt in die Atmosphäre bedeutet im Sinne der vorliegenden Erfindung, dass ein Bauteil aus dem Weltraum in die Atmosphäre eines Himmelkörpers, vorzugsweise der Erde, eintritt. Dabei ist die vorliegende Erfindung nicht begrenzt auf den Eintritt in die Atmosphäre der Erde. Es ist auch gewünscht, dass beispielsweise Weltraumschrott nicht auf anderen Himmelskörpern auftritt. Dies kann mit der erfindungsgemäßen Beschichtung ermöglicht werden.

Beim atmosphärischen Eintrittsflug wird Weltraumschrott der umgebenden Strömung ausgesetzt. Daraus resultieren aerodynamische und aerothermale Lasten. Damit Teile und Komponenten von Raumfahrzeugen diese Flugphase nicht überstehen und den Boden nicht erreichen, müssen diese durch die auftretenden Lasten hinreichend zerstört werden. Bei Metallen geht man von einer Zerstörung aus, wenn die Teile vollständig aufgeschmolzen sind. Ausschlaggebend hierfür ist der maximal auftretende Wärmestrom, der hoch genug sein muss, um das Material zum Schmelzen bringen zu können, und die thermische Trägheit der Teile, die das Aufheizen verzögert.

Auf Grund der hohen Geschwindigkeiten beim Eintritt eines Bauteils aus dem Weltraum in die Atmosphäre eines Himmelskörpers, wie beispielsweise der Erde oder dem Mars, liegt in der das Bauteil umgebenden Atmosphäre während der heißen Phase des Eintritts Sauerstoff üblicherweise in großen Teilen in atomarer Form, also als O˙ vor. Bei höheren Eintritts-Geschwindigkeiten trifft dies auch auf den in der Atmosphäre vorhandenen Stickstoff zu. Reagieren zwei Sauerstoff-Radikale zu molekularem Sauerstoff O₂ oder zwei Stickstoff-Atome zu molekularem Stickstoff wird Energie freigesetzt. Eine solche Rekombination erfolgt aufgrund der geringen Gasdichten jedoch üblicherweise bei den Bedingungen, die bei einem Eintritt von Bauteilen in die Atmosphäre herrschen, nur sehr bedingt in den Zeitskalen der Strömung. Durch eine Verbindung, die die Reaktion katalysiert, findet diese vermehrt statt.

Durch die erfindungsgemäß verwendete Beschichtung wird also die Rekombination von molekularem Sauerstoff und/oder Stickstoff katalysiert. Da die Rekombination unmittelbar an der Oberfläche des beschichteten Bauteils erfolgt, wird die hierbei freiwerdende Energie auch auf das Bauteil selbst übertragen. Es entsteht also ein zusätzlicher Wärmegewinn, der zum Anstieg der Temperatur des Bauteils beiträgt.

Entsprechend wird der in das Bauteil eindringende Wärmestrom signifikant von den Oberflächeneigenschaften des Bauteils beeinflusst.

Die erfindungsgemäße Beschichtung ermöglicht die verbesserte Zerstörbarkeit von Bauteilen, indem sie den in das Bauteil netto eindringenden Wärmestrom erhöht. Dies kann zum einen dadurch erfolgen, dass die Beschichtung die katalytische Aktivität der Oberfläche erhöht und damit den von der Umgebung aufgenommenen Wärmestrom erhöht. Eine Beschichtung kann jedoch auch den in das Bauteil netto eindringenden Wärmestrom erhöhen, indem die Emissivität verringert wird. Dadurch kann insbesondere der Wärmeverlust durch Wärmestrahlung verringert werden.

Der netto in das Bauteil eindringende Wärmestrom im Sinne der vorliegenden Erfindung ist der vom Bauteil von der Umgebung brutto aufgenommene Wärmestrom abzüglich des dem Bauteil durch Wärmestrahlung verloren gehenden Wärmestroms. Der Hauptanteil des brutto aufgenommenes Wärmestrom ist der konduktiv aus der Umströmung aufgenommene Wärmeström. Je nach Oberfläche, Geometrie und Flugbahn des Bauteils können neben dem konduktiven Wärmestrom auch auf der Bauteil-Oberfläche entstehende Wärme und von der Umgebung abgestrahlte und vom Bauteil aufgenommene Wärmestrahlung zum Bruttowärmestrom beitragen.

Der in das Bauteil netto eindringende Wärmestrom kann durch die erfindungsgemäße Beschichtung erhöht werden, indem der Wärmeverlust infolge thermischer Abstrahlung reduziert wird. Der abgestrahlte Wärmestrom ist abhängig von der Wandtemperatur und der Emissivität. Letztere kann ebenfalls durch die erfindungsgemäße Beschichtung angepasst werden, wodurch weniger Wärme verloren geht. In der Folge erfährt das mit der erfindungsgemäßen Beschichtung behandelte Bauteil einen höheren Netto-Wärmestrom. Dieser Effekt kann durch eine reduzierten brutto aufgenommenen Wärmestrom gemindert werden. Dies ist der Fall, wenn die von der Umgebung abgestrahlte und auf das Bauteil auftreffende Wärmestrahlung signifikant zum Brutto-Wärmestrom beiträgt. Dies ist in der Regel nur bei sehr schnellen Eintritts-Flügen der Fall. In diesem Fall sind die auftretenden Wärmelasten sehr hoch und die erfindungsgemäße Beschichtung meist für eine vollständige Zerstörung der Bauteile nicht nötig.

Die Beschichtung kann erfindungsgemäß dafür sorgen, dass das Material des Bauteils nicht oder weniger schnell korrodiert. Die Korrosion der Bauteiloberfläche kann dazu führen, dass die Emissivität des Bauteils und damit die Wärmeabstrahlung des Bauteils in die Umgebung gegenüber dem unbeeinflussten Bauteil steigt. Dieser Wärmeverlust wird durch die Beschichtung erfindungsgemäß reduziert, indem die Emissivität des Bauteils auf einem niedrigeren Niveau verbleibt.

Im Resultat heizt sich das Bauteil schneller auf und es können höhere Temperaturen erreicht bzw. die Schwelle zur Zerstörbarkeit auch für Bauteile aus problematischen Materialien wie Stahl und Titan-Legierungen überschritten werden.

Vorzugsweise ist die Beschichtung eine metallische Beschichtung. Es hat sich gezeigt, dass nicht-metallische Beschichtungen, wie beispielsweise keramische, gläserne oder organische Beschichtungen, oft keine ausreichend guten katalytischen Eigenschaften aufweisen. Ebenso wird die Emissivität des Bauteils im Bereich der thermischen Abstrahlung meist nicht hinreichend reduziert. Nicht-metallische Beschichtungen zeichnen sich oft durch eine niedrigere Wärmeleitfähigkeit aus. Dies behindert den Wärmetransport in das Bauteil und reduziert folglich den aufgenommenen Wärmestrom und die Zerstörbarkeit.

Geeignete metallische Beschichtungen bestehen aus ein oder mehr Schichten und weisen ein oder mehrere Metalle auf. Sie sind gegebenenfalls in der Lage, die Rekombination von Sauerstoff und/oder Stickstoff, wie zuvor beschrieben, mittels der katalytisch wirksamen obersten Schicht, zu katalysieren. Die katalytische Wirkung der katalytisch wirksamen Schicht kann gegebenenfalls aus den während des atmosphärischen Eintritts aus der Beschichtung entstehenden Produkten, wie zum Beispiel Metall-Oxiden, resultieren. Die Beschichtungen reduzieren gegebenenfalls die Emissivität des Bauteils durch die geringere Emissivität der optisch wirksamen Schicht beziehungsweise der während des atmosphärischen Eintritts aus der Beschichtung entstehenden Produkte, wie zum Beispiel Metall-Oxide. Die Beschichtungen sind vorzugsweise dünn, erhöhen das Gewicht des Bauteils damit nur unwesentlich. Das Gewicht spielt in der Raumfahrt eine große Rolle.

Weiterhin sollten die Materialien der Beschichtung nicht zu sehr ineinander oder in das Bauteil diffundieren, um zum einen die Eigenschaften des Bauteils nicht zu verändern. Zum anderen muss die Beschichtung auch nach einem längeren Aufenthalt im Weltraum (üblicherweise 5 bis 15 Jahre für Satelliten) beim Eintritt in die Atmosphäre noch zur Verfügung stehen. Auch bei einem Wiedereintritt innerhalb von 25 Jahre nach dem Nutzungsende, muss die Beschichtung intakt sein. Zudem muss auch während des Eintritts-Fluges die Beschichtung lange genug zur Verfügung stehen, um den Zerstörungs-Vorgang der Konzeption entsprechend zu beeinflussen. Eine erfindungsgemäße Beschichtung kann daher weiterhin als eine Zwischenschicht eine oder mehrere Diffusions-Sperrschichten enthalten. Hierfür haben sich besonders die galvanisch abscheidbaren Metalle Nickel und Palladium bewährt.

Als besonders geeignet für die Reduktion der Emissivität in der aggressiven Atmosphäre des Eintritts-Fluges haben sich Beschichtungen aus Aluminium und Chrom herausgestellt. Für die Erhöhung der katalytischen Aktivität zeigten sich Silber und Kupfer als besonders geeignet. Titan ist als Beschichtung im Sinne der vorliegenden Erfindung ungeeignet und daher explizit ausgeschlossen.

Erfindungsgemäß kann das Bauteil eine Beschichtung aus Aluminium aufweisen, oder eine Beschichtung aus Silber oder eine Beschichtung aus Kupfer oder eine Beschichtung aus Chrom. Es kann auch eine Beschichtung aus einer Mischung aus zwei oder drei oder vier der genannten Metalle in einer oder mehreren Schichten aufweisen. Erfindungsgemäß ist es auch möglich, dass das Bauteil eine mehrlagige Beschichtung aus 2, 3, 4, 5 oder 6 Schichten aufweist. Es ist möglich, dass Mehrschichten mit sich wiederholender Zusammensetzung vorliegen. Es ist jedoch bevorzugt, dass jede Schicht aus einem Metall besteht, welches von dem Metall der angrenzenden Schicht verschieden ist.

Die Beschichtung besteht erfindungsgemäß aus den Materialien. Dies bedeutet, dass die Beschichtung im Wesentlichen aus einem der genannten Metalle besteht. Dabei ist es jedoch möglich, dass das entsprechende Metall andere Bestandteile in einem Anteil von bis zu 10 Gew.-% aufweist. Vorzugsweise besteht die Beschichtung zu 95 Gew.-% oder mehr, insbesondere zu 98 Gew.-% oder mehr, bevorzugt zu 99 Gew.-% oder mehr, besonders bevorzugt zu 99,5 Gew.-% oder zu 99,9 Gew.-% oder mehr aus dem entsprechenden Metall.

Die Schichtdicken der einzelnen Schichten der Beschichtung sind erfindungsgemäß so gewählt, dass sie die genannten Aufgaben bewältigen können. Zudem darf die Beschichtung Größe und Gewicht des Bauteils nicht wesentlich beeinflussen. Die Gesamtdicke beträgt daher vorzugsweise 100 µm oder weniger, insbesondere 75 µm oder weniger, vorzugsweise 50 µm oder weniger, vorzugsweise 25 µm oder weniger, besonders 10 µm oder weniger. Besonders bevorzugt beträgt die Dicke 5 µm oder weniger, insbesondere bevorzugt 3 µm oder weniger, vorzugsweise 2 µm oder weniger.

Eine atomare Monolage der katalytisch wirksamen Schicht würde theoretisch ausreichen, um den gewünschten katalytischen Effekt bei der Verwendung zu erhalten. Auf Grund von Diffusion in das Bauteil, ist das Aufbringen einer Monolage dieses Beschichtungsmaterials auf das Bauteil oder die darunter liegenden Schichten nicht ausreichend. Die Schichtdicke beträgt daher vorzugsweise 0,001 µm oder mehr, insbesondere 0,01 µm oder mehr, vorzugsweise 0,1 oder 0,5 µm oder mehr, bevorzugt 1 µm oder mehr. Die katalytisch wirksame Schicht ist, falls vorhanden, zwangsläufig die oberste Schicht. Sie kann bei geringer Schichtstärke optisch vernachlässigbar sein oder die optisch wirksame Schicht darstellen oder diese unterstützen.

Die optisch wirksame Schicht ist, falls vorhanden, dick genug, um den erfindungsgemäßen Einfluss auf die Emissivität trotz des korrosiven Angriffs der das Bauteil während des Eintritts umgebenden Atmosphäre zu gewährleisten. Die Schichtdicke beträgt daher vorzugsweise 0,1 µm oder mehr, insbesondere 0,3 µm oder mehr, vorzugsweise 1 µm oder 3 µm oder mehr, bevorzugt 10 µm oder mehr. Die optisch wirksame Schicht kann gleichzeitig katalytisch wirksam sein und die katalytische Schicht ersetzen.

Die Diffusions-Sperrschicht oder -Schichten sind, falls vorhanden, dick genug, um die Diffusion der übrigen Schichten beziehungsweise der während des Eintritts daraus entstehenden Produkte untereinander oder in das Bauteil ausreichend zu verlangsamen oder zu verhindern. Die Schichtdicke beträgt daher vorzugsweise 0,01 µm oder mehr, insbesondere 0,03 µm oder mehr, vorzugsweise 0,1 µm oder 0,3 µm oder mehr, bevorzugt 1 µm oder mehr.

Die Gesamtdicke der Beschichtung kann beispielsweise 6, 7, 8, 9 oder 10 µm oder mehr betragen. Vorzugsweise beträgt sie weniger als 50 µm, insbesondere 30 µm oder weniger.

Erfindungsgemäß ist das Bauteil beispielsweise ein Drallrad auf einem Satelliten, ein größerer Motor, Zahnräder und Getriebe (z.B. der Antrieb der Satelliten-Paneele), Wucht-Massen aus Stahl, Magnettorquer mit magnetischem Spulen-Kern, Tanks oder Brennkammern.

## Patentansprüche

1. Verwendung einer Beschichtung für ein Bauteil in der Raumfahrt **dadurch gekennzeichnet, dass** die Beschichtung eine Erhöhung des Wärmestroms in das Bauteil beim Eintritt des Bauteils aus dem Weltraum in die Atmosphäre ermöglicht.

2. Verwendung nach Anspruch 1, **dadurch gekennzeichnet, dass** die Beschichtung die Emissivität des Bauteils senkt.

3. Verwendung nach Anspruch 1 oder 2, **dadurch gekennzeichnet, dass** die Beschichtung während des Eintritts in den Weltraum katalytisch aktiv ist, so dass an der Kontaktfläche zwischen Atmosphäre und Beschichtung in der Atmosphäre vorhandener atomarer Sauerstoff zu molekularem Sauerstoff und/oder atomarer Stickstoff zu molekularem Stickstoff reagiert, wodurch das Bauteil beim Eintritt in die Atmosphäre im Wesentlichen vollständig verglüht.

4. Verwendung nach einem oder mehreren der Ansprüche 1 bis 3, **dadurch gekennzeichnet, dass** die Beschichtung eine metallische Beschichtung ist.

5. Verwendung nach einem oder mehreren der Ansprüche 1 bis 4, **dadurch gekennzeichnet, dass** die Beschichtung Aluminium, Kupfer, Silber, Chrom, Nickel, Palladium und/oder Mischungen aus diesen aufweist.

6. Verwendung nach einem oder mehreren der Ansprüche 1 bis 5, **dadurch gekennzeichnet, dass** die Beschichtung eine Schichtdicke von 100 µm oder weniger, insbesondere 50 µm oder weniger, vorzugsweise 10 µm oder weniger, bevorzugt 5 µm oder weniger, besonders 2 µm oder weniger aufweist.

7. Bauteil nach einem oder mehreren der Ansprüche 1 bis 6, **dadurch gekennzeichnet, dass** die Beschichtung eine Schichtdicke im Bereich von 0,001 µm oder mehr, insbesondere 0,01 µm oder mehr, vorzugsweise 0,1 oder 0,5 µm oder mehr, bevorzugt 1 µm oder mehr aufweist.

8. Bauteil nach einem der Ansprüche 1 bis 7, **dadurch gekennzeichnet, dass** die Beschichtung mehrere Lagen, insbesondere 2, 3, 4, 5 oder 6 Lagen aufweist.

9. Verwendung nach einem oder mehreren der Ansprüche 1 bis 8, **dadurch gekennzeichnet, dass** das Bauteil ein Drallrad auf einem Satelliten, ein größerer Motor, Zahnräder und Getriebe (z.B. der Antrieb der Satelliten-Paneele), Wucht-Massen aus Stahl, Magnettorquer mit magnetischem Spulen-Kern, ein Tank oder eine Brennkammer ist.
